# EUROPEAN PATENT SPECIFICATION

(11) **EP 3 305 620 B1**
(45) Date of publication and mention of the grant of the patent: **07.08.2019**
(21) Application number: 15894190.6
(22) Date of filing: 03.06.2015
(51) Int. Cl.: B60W 50/029, B60T 17/18, B60W 30/10, B62D 6/00

(54) **VEHICLE CONTROL DEVICE AND VEHICLE CONTROL METHOD**
FAHRZEUGSTEUERUNGSVORRICHTUNG UND FAHRZEUGSTEUERUNGSVERFAHREN
DISPOSITIF ET PROCÉDÉ DE COMMANDE DE VÉHICULE

(43) Date of publication of application: 11.04.2018
(73) Proprietor: Nissan Motor Co., Ltd., Yokohama-shi, Kanagawa 221-0023 (JP)
(72) Inventor: MIURA, Masahiro, Atsugi-shi Kanagawa 243-0123 (JP); DEGUCHI, Yoshitaka, Atsugi-shi Kanagawa 243-0123 (JP)
(74) Representative: Grünecker Patent- und Rechtsanwälte PartG mbB
(86) International application number: PCT/JP2015/065982
(87) International publication number: WO 2016/194157

(56) References cited:
- EP-A1- 2 360 077
- WO-A1-2015/036393
- DE-A1-102010 060 350
- DE-A1-102012 111 991
- DE-A1-102013 007 857
- DE-A1-102013 103 372
- DE-A1-102013 204 893
- DE-A1-102013 213 171
- DE-A1-102014 013 173
- GB-A- 2 419 430
- JP-A- 2003 063 373
- JP-A- 2008 120 265
- JP-A- 2009 051 356
- JP-A- 2011 210 095
- JP-A- 2011 240 816
- US-A1- 2010 228 427
- US-A1- 2012 283 907
- US-A1- 2015 057 891

## Description

The present invention relates to a vehicle control device and a vehicle control method.

A technique has heretofore been known which changes driving assistance in accordance with failure of actuators (Patent Literature 1). In Patent Literature 1, if failure of one actuator is detected, the influence of that failure on the rate of contribution to safety is computed, and driving assistance is changed based on the computation result.

DE 10 2013 213171 A1 relates to control of an autonomous vehicle wherein, in addition to a standard trajectory, a second safety trajectory s determined, which is set to allow for the vehicle to come to a safe and quick stop. When the vehicle cannot be operated autonomously, the travel trajectory is switched from the standard to the safety trajectory.

DE 10 2013 007857 A1 relates to an autonomously driven vehicle, wherein an emergency action plan is determined in order to allow the vehicle to come to a stop when an error in the breaking system of the vehicle occurs.

DE 10 2014 013173 A1 relates to control of an autonomous vehicle, wherein lateral control of the vehicle is switched from a primary to a secondary actuator and the vehicle's speed is reduced in a case where an error occurs in the primary actuator.

### CITATION LIST

### PATENT LITERATURE

Patent Literature 1: Japanese Patent Application Publication No. 2011-210095

However, techniques that change driving assistance after detecting failure as in Patent Literature 1 cannot handle cases where a vehicle cannot already travel safely when failure occurs in its actuator.

The present invention has been made in view of the above problem, and an object thereof is to provide a vehicle control device and a vehicle control method which enable autonomous driving ensuring safety for a certain period of time even when failure occurs in an actuator.

This is achieved by the features of the independent claims.

A vehicle control device according to one aspect of the present invention includes a periphery-information detection unit that detects information on a periphery of a vehicle, and a travel-state detection unit that detects a travel state of the vehicle, and controls autonomous travel of the vehicle based on the detected information on the periphery, the detected travel state, and a higher-level action plan for reaching a destination set in advance, and a lower-level action plan for controlling at least one of a vehicle-speed target value and a steering target value to accomplish the higher-level action plan, computes a compensation range for the higher-level action plan that allows travel in a state where performance of one of actuator units has decreased, the actuator units each including a redundant configuration and used for the autonomous travel of the vehicle, and limits the higher-level action plan by using the computed compensation range.

### BRIEF DESCRIPTION OF DRAWINGS

Fig. 1 is a schematic configuration diagram of a vehicle control device according to a first embodiment of the present invention.
Fig. 2 is a diagram explaining the detection ranges of a sensor group according to the first embodiment of the present invention.
Fig. 3 is a diagram explaining actuators' redundant configurations according to the first embodiment of the present invention.
Fig. 4 is a diagram explaining an example of travel control according to the first embodiment of the present invention.
Fig. 5 is a diagram explaining another example of the travel control according to the first embodiment of the present invention.
Fig. 6 is a flowchart explaining an example of the operation of the vehicle control device according to the first embodiment of the present invention.
Fig. 7 is a schematic configuration diagram of a vehicle control device according to a second embodiment of the present invention.

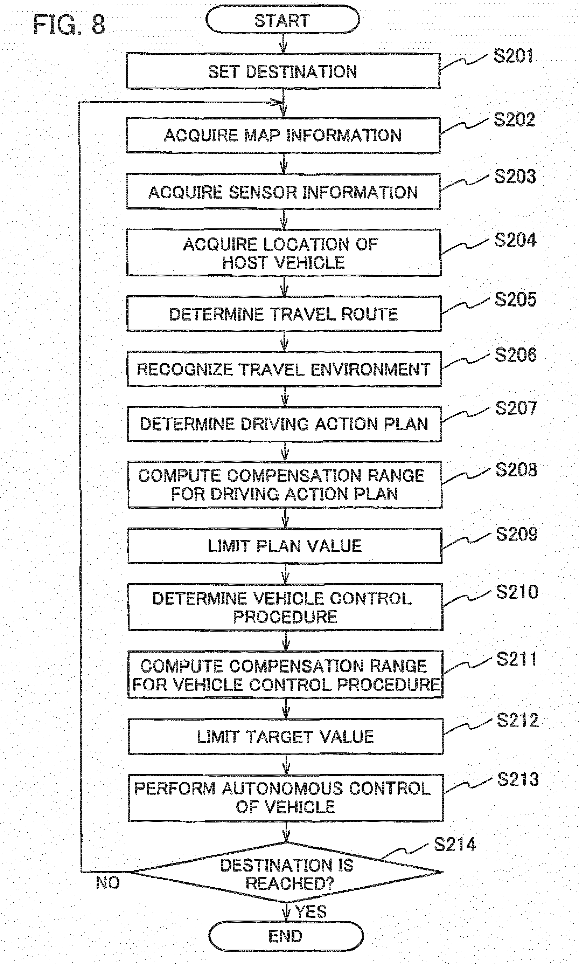

Fig. 8 is a flowchart explaining an example of the operation of the vehicle control device according to the second embodiment of the present invention.

### DESCRIPTION OF EMBODIMENTS

Embodiments of the present invention will be described below with reference to the drawings. Identical portions in the illustration of the drawings will be denoted by identical reference signs, and description thereof will be omitted.

### [First Embodiment]

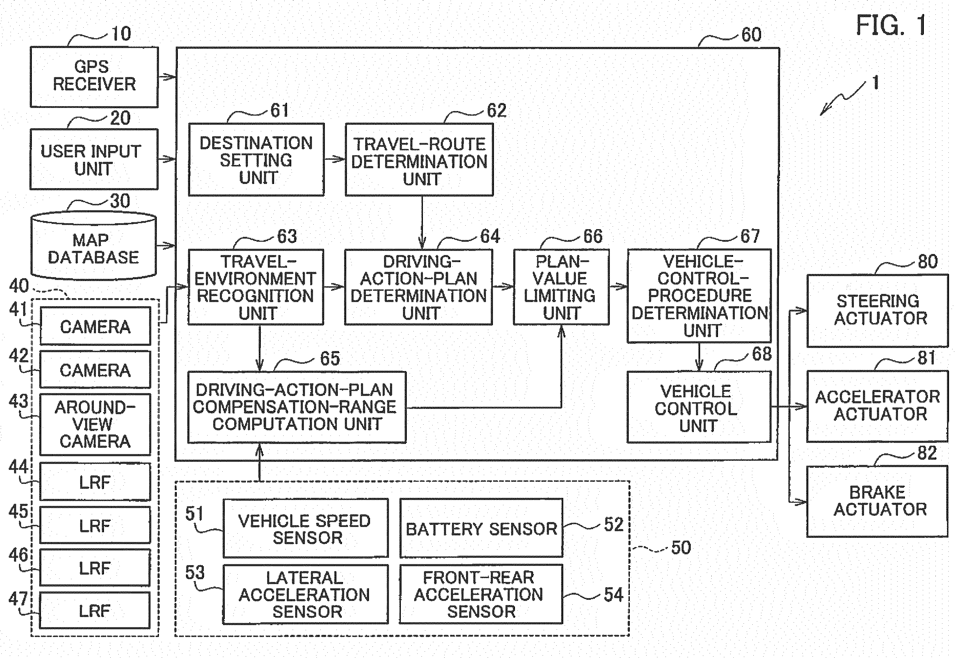

The configuration of a vehicle control device 1 according to a first embodiment of the present invention will be described with reference to Fig. 1. The vehicle control device 1 is applied to a vehicle having an autonomous driving function. As illustrated in Fig. 1, the vehicle control device 1 includes a GPS receiver 10, a user input unit 20, a map database 30 storing map information such as road information and facility information, a sensor group 40, a sensor group 50, a travel controller 60, a steering actuator 80 having a redundant configuration, an accelerator actuator 81, and a brake actuator 82 having a redundant configuration.

The GPS receiver 10 detects the current location of the host vehicle on the ground by receiving radio waves from an artificial satellite. The GPS receiver 10 outputs the detected current location of the host vehicle to the travel controller 60.

The user input unit 20 is a device for the driver or an occupant to input various pieces of information and, for example, displays a screen for setting a destination on a display. The user input unit 20 outputs information inputted by the driver or an occupant to the travel controller 60.

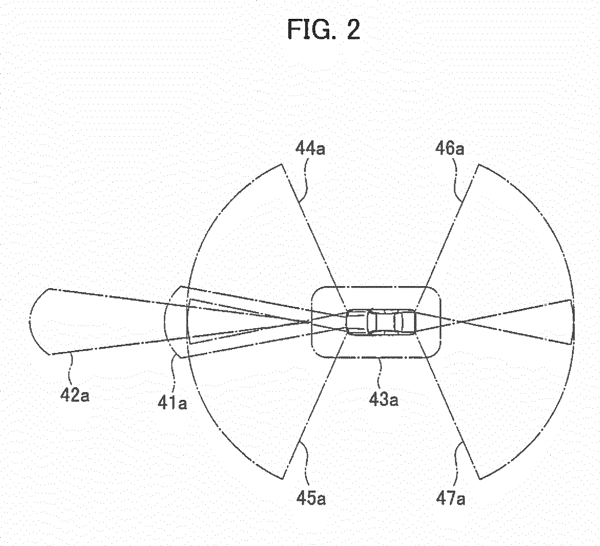

The sensor group 40 (periphery-information detection unit) is a plurality of sensors that are installed on the host vehicle and detect information on the periphery of the host vehicle. Specifically, the sensor group 40 is constituted of cameras 41, 42, an around-view camera 43, and laser rangefinders 44, 45, 46, 47. Now, these sensors' functions and detection ranges will be described with reference to Fig. 2.

The cameras 41, 42 are cameras having an imaging device with a CCD (charge-coupled device), CMOS (complementary metal oxide semiconductor), or the like, and image front sides of the host vehicle. More specifically, the camera 41 is a camera that detects obstacles (pedestrians, bicycles, motorcycles, other vehicles, etc.) and traffic lights present on a front side of the host vehicle, and its detection range is a detection range 41a illustrated in Fig. 2. The camera 41 has an image processing function and can detect information indicating relations between detected obstacles on the front side and the host vehicle, for example, information on the speeds and positions of the obstacles on the front side relative to the host vehicle, and detect the positions and sizes of the traffic lights as well as the colors of the traffic lights.

Also, the camera 42 is a camera that images a farther front side than the camera 41, and detects obstacles present on the farther front side. The detection range of the camera 42 is a detection range 42a illustrated in Fig. 2. Similarly to the camera 41, the camera 42 too has an image processing function and can detect information indicating relations between obstacles on the farther front side and the host vehicle.

The around-view camera 43 is constituted of a total of four cameras installed on the front, rear, and sides of the host vehicle, and detects white lines around the host vehicle, other vehicles in the next lane(s), and the like. The detection range of the around-view camera 43 is a detection range 43a illustrated in Fig. 2.

The laser rangefinders 44 to 47 are installed on the front right, front left, rear right, and rear left of the host vehicle, respectively, and detect obstacles and the like present to the front right, front left, rear right, and rear left of the host vehicle, respectively. Specifically, the laser rangefinders 44 to 47 each detect the distances and angles between the host vehicle and obstacles by scanning a laser beam within a certain angular range, receiving light reflected thereafter, and detecting the time difference between the point when the laser was emitted and the point when the reflected light was received. The detection ranges of the laser rangefinders 44 to 47 are detection ranges 44a to 47a illustrated in Fig. 2, respectively.

The sensor group 40 outputs detected information to the travel controller 60. Note that the sensors constituting the sensor group 40 are not limited to the above; for example, laser sensors, millimeter-wave radars, ultrasonic sensors, or the like may be used instead.

Referring back to Fig. 1, the rest of the configuration of the vehicle control device 1 will be described.

The sensor group 50 (travel-state detection unit) are a plurality of sensors that are installed on the host vehicle and detect information on the travel state of the host vehicle. Specifically, the sensor group 50 is constituted of a vehicle speed sensor 51, a battery sensor 52, a lateral acceleration sensor 53, and a front-rear acceleration sensor 54.

The vehicle speed sensor 51 detects the speed of the host vehicle from the number of rotations of its wheels, and outputs the detected speed to a driving-action-plan compensation-range computation unit 65.

The battery sensor 52 detects the state of charge (SOC) of the battery provided on the host vehicle, and outputs the detected state of charge to the driving-action-plan compensation-range computation unit 65.

The lateral acceleration sensor 53 detects the lateral acceleration of the host vehicle (the acceleration of the vehicle in the left-right direction), and outputs the detected lateral acceleration to the driving-action-plan compensation-range computation unit 65.

The front-rear acceleration sensor 54 detects the front-rear acceleration of the host vehicle, and outputs the detected front-rear acceleration to the driving-action-plan compensation-range computation unit 65.

The travel controller 60 implements autonomous driving by controlling the steering actuator 80, the accelerator actuator 81, and the brake actuator 82 (hereinafter, referred to simply as the various actuators) based on information acquired from the GPS receiver 10, the user input unit 20, the map database 30, the sensor group 40, and the sensor group 50. Note that the map database 30 may be stored in an automotive navigation system mounted in the vehicle or stored in a server. In the case where the map database 30 is stored in a server, the travel controller 60 can acquire map information on a timely basis via communication. Meanwhile, the travel controller 60 is, for example, a computer constituted of a CPU, an ROM, and an RAM as well as a data bus and input-output interfaces connecting them, and the CPU performs predetermined processing by following a program stored in the ROM.

The travel controller 60 includes a destination setting unit 61, a travel-route determination unit 62, a travel-environment recognition unit 63, a driving-action-plan determination unit 64, a driving-action-plan compensation-range computation unit 65, a plan-value limiting unit 66, a vehicle-control-procedure determination unit 67, and a vehicle control unit 68.

The destination setting unit 61 sets a destination based on information acquired from the user input unit 20. The destination setting unit 61 then outputs the set destination to the travel-route determination unit 62.

Based on the destination acquired from the destination setting unit 61, the current location of the host vehicle acquired from the GPS receiver 10, and the map information acquired from the map database 30, the travel-route determination unit 62 determines the optimal travel route from the current location to the destination. The optimal travel route is, for example, a route allowing the destination to be reached from the current location with the shortest distance or the shortest time. The travel-route determination unit 62 outputs the determined travel route to the driving-action-plan determination unit 64. Note that the travel route determined by the travel-route determination unit 62 is a route covering driving lanes.

The travel-environment recognition unit 63 recognizes the travel environment of the periphery of the host vehicle based on information acquired from the sensor group 40. The travel environment includes, for example, the presence or absence of other vehicles, the positions of white lines, the presence or absence of traffic lights, the presence or absence of crosswalks, the presence or absence of pedestrians, signs on the road, the road surface condition, and so on. The travel-environment recognition unit 63 outputs information on the recognized travel environment to the driving-action-plan determination unit 64 and the driving-action-plan compensation-range computation unit 65.

The driving-action-plan determination unit 64 determines a driving action plan in real time during travel based on the travel route acquired from the travel-route determination unit 62 and the information acquired from the travel-environment recognition unit 63. The driving action plan in the present invention is, for example, a plan regarding how many meters before an intersection ahead the host vehicle should change its lane to the right-turn lane in a scene where the host vehicle is to turn right at the intersection. Further, if the right-turn lane is jammed in the example of turning right at the intersection, the driving-action-plan determination unit 64 can plan to change the lane to the right-turn lane at a point further before the above lane change point for better safety, since the driving-action-plan determination unit 64 determines the driving action plan in real time during travel. Furthermore, the driving-action-plan determination unit 64 computes positional information such as acceleration-deceleration start position or lane-change start position as a calculation value and outputs them to the plan-value limiting unit 66.

The driving-action-plan compensation-range computation unit 65 (higher-level action-plan compensation-range computation unit) computes a compensation range for the driving action plan based on the information acquired from the travel-environment recognition unit 63 and the sensor group 50. Specifically, the driving-action-plan compensation-range computation unit 65 computes a compensation range for the driving action plan that can ensure safety in a case where abnormality has occurred in one of the actuators having a redundant configuration (such as decrease in driving performance or braking performance or failure) based on the information on the location of the host vehicle, the traffic lights, other vehicles, pedestrians, and the like present on the periphery of the host vehicle, and the information on the road surface condition and the travel state of the host vehicle. In the present invention, the compensation range for the driving action plan is a positional range and in particular a positional range that can ensure safety even when acceleration-deceleration control and steering control are initiated with abnormality occurring in one of the actuators. The driving-action-plan compensation-range computation unit 65 calculates pieces of positional information related to the compensation range for the driving action plan, and outputs information in which these pieces of positional information are gathered as a calculation value to the plan-value limiting unit 66.

The plan-value limiting unit 66 (higher-level action-plan limiting unit) limits or changes the calculation value acquired from the driving-action-plan determination unit 64 based on the computation result acquired from the driving-action-plan compensation-range computation unit 65, and outputs the limited or changed driving action plan to the vehicle-control-procedure determination unit 67.

The vehicle-control-procedure determination unit 67 determines a control procedure for the host vehicle based on the driving action plan acquired from the plan-value limiting unit 66. The control procedure refers to a vehicle-speed target value and a steering target value to accomplish the driving action plan. To describe the vehicle-speed target value and the steering target value by the above-mentioned example of turning right at an intersection, they are target values related to the vehicle speed and the steering necessary for the host vehicle to change its lane while maintaining safe distance to other neighboring vehicles when reaching the lane change point. The vehicle-control-procedure determination unit 67 then outputs the determined control procedure to the vehicle control unit 68.

The vehicle control unit 68 controls the various actuators by outputting control signals to the various actuators in accordance with the control procedure acquired from the vehicle-control-procedure determination unit 67. As a result, autonomous driving is implemented.

Note that in the first embodiment, the travel route to the destination and the driving action plan for the travel route will be referred to as the higher-level action plan. Also, in the first embodiment, an action plan for controlling at least one of the vehicle-speed target value and the steering target value to accomplish the higher-level action plan will be referred to as the lower-level action plan.

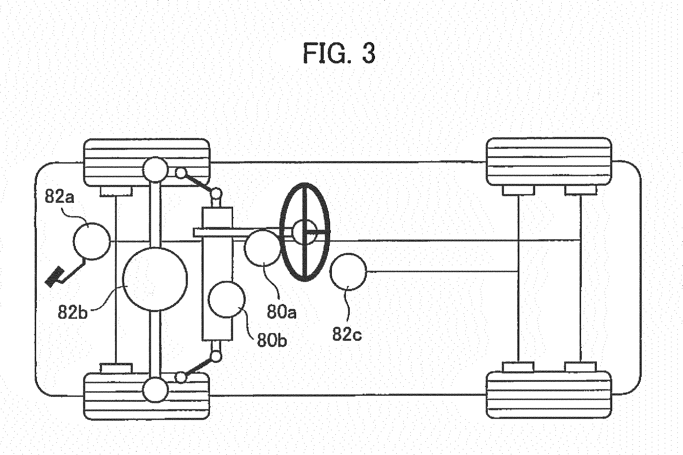

Next, the redundant configurations of the steering actuator 80 (actuator unit) and the brake actuator 82 (actuator unit) will be described with reference to Fig. 3. As illustrated in Fig. 3, the steering actuator 80 includes a steering-reaction-force generation motor 80a (steering motor) and a rack assist motor 80b (rack motor). Also, as in a steer-by-wire system, the steering-reaction-force generation motor 80a is installed on the steering side, and the rack assist motor 80b is installed on the rack side. The steering-reaction-force generation motor 80a and the rack assist motor 80b operate in a standby mode or in a parallel operation mode, and form a redundant configuration serving as a backup function to compensate safety even when one of them fails.

Also, as illustrated in Fig. 3, the brake actuator 82 includes a friction-brake assist motor 82a (friction brake), a drive motor 82b that functions as a regenerative cooperative brake, and a parking brake 82c. The friction-brake assist motor 82a, the drive motor 82b, and the parking brake 82c operate in a standby mode or in a parallel operation mode, and form a redundant configuration serving as a backup function to compensate safety even when one of them fails.

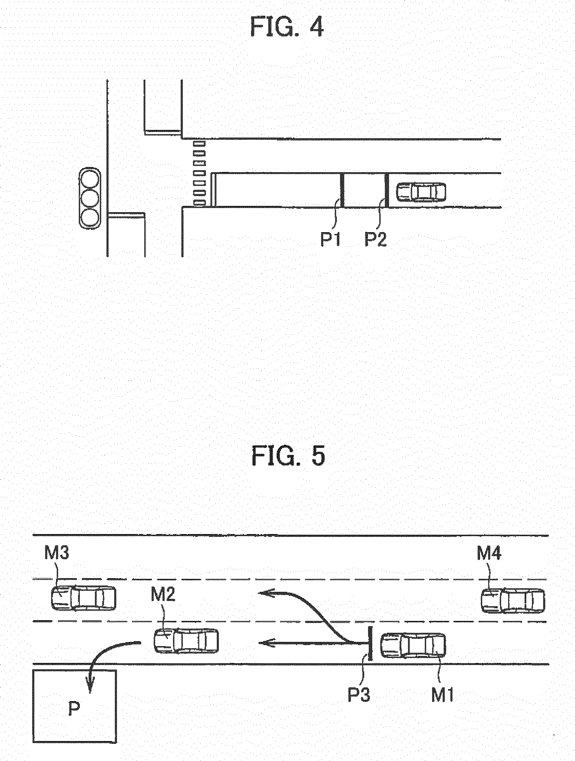

Next, an example of the travel control in the first embodiment will be described with reference to Fig. 4.

As illustrated in Fig. 4, in a case where the host vehicle is to stop at a T intersection with a traffic light (a red light ahead for the host vehicle), the driving-action-plan determination unit 64 determines a plan to start deceleration at a deceleration start position P1 as a driving action plan. Here, the deceleration start position P1 is a deceleration start position that allows the host vehicle to stop at the stop position on condition that the friction-brake assist motor 82a, the drive motor 82b, and the parking brake 82c are all operating normally. Meanwhile, there is a possible case where the host vehicle will not be able to stop at the stop position with the regenerative cooperative brake by the drive motor 82b (hereinafter, referred to simply as the regenerative cooperative brake) and the parking brake 82c of the brake actuator 82, which has a redundant configuration, if the friction-brake assist motor 82a fails when the host vehicle reaches the deceleration start position P1 and is about to start deceleration.

For this reason, the driving-action-plan compensation-range computation unit 65 computes a compensation range for the driving action plan which allows the host vehicle to stop at the stop position only with the regenerative cooperative brake even if one part of the brake actuator 82, having a redundant configuration, for example, the friction-brake assist motor 82a fails. Specifically, the driving-action-plan compensation-range computation unit 65 calculates a deceleration start position P2 for starting deceleration before the deceleration start position P1 relative to the intersection so that the host vehicle will be able to stop at the stop position only with the regenerative cooperative brake. Note that the driving-action-plan compensation-range computation unit 65 can calculate the deceleration start position P2 from the current vehicle speed, the distance to the stop position, and the regenerative cooperative braking force.

The driving-action-plan compensation-range computation unit 65 outputs the calculated deceleration start position P2 (calculation value) to the plan-value limiting unit 66. Then, the plan-value limiting unit 66 limits the driving action plan such that the host vehicle will start deceleration at the deceleration start position P2. By limiting the driving action plan in this manner, the driving action plan will remain unchanged even if the friction-brake assist motor 82a actually fails, and the host vehicle will therefore not come to a standstill or an emergency stop. Thus, the host vehicle will be able to stop at the stop position even if the friction-brake assist motor 82a actually fails, and hence autonomous driving ensuring safety for a certain period of time will be possible. Note that the driving-action-plan compensation-range computation unit 65 may calculate a deceleration start position that allows the host vehicle to stop at the stop position only with the friction-brake assist motor 82a. In this way, the host vehicle will be able to stop at the stop position even if the drive motor 82b actually fails, and hence autonomous driving ensuring safety for a certain period of time will be possible.

Also, the driving-action-plan compensation-range computation unit 65 may compute the compensation range for the driving action plan by taking into account a case where the braking performance of the friction-brake assist motor 82a has decreased (for example, a case where only 50% of the output in the normally operating condition can be exhibited). Moreover, the driving-action-plan compensation-range computation unit 65 may set the deceleration start position in accordance with the backup function such that the host vehicle can come to an emergency stop when a pedestrian pops out.

Next, another example of the travel control in the first embodiment will be described with reference to Fig. 5.

As illustrated in Fig. 5, in a scene where a host vehicle M1 is to pass another vehicle M2 ahead to ensure smooth travel when the other vehicle M2 decelerates to leave the road to the outside thereof, the driving-action-plan compensation-range computation unit 65 judges whether or not the inter-vehicle distance between the host vehicle M1 and the other vehicle M2 (the distance from a position P3 to the other vehicle M2) is an inter-vehicle distance, with respect to the rate of deceleration of the other vehicle M2, that allows the host vehicle M1 to avoid the other vehicle M2 only with the rack assist motor 80b.

Specifically, the driving-action-plan compensation-range computation unit 65 makes the judgment by comparing the time the host vehicle M1 will take to complete the lane change (This may be obtained by finding an estimated vehicle-body slip angle and estimating the time that will be taken to move a distance equivalent to one lane. This time will be hereinafter referred to simply as the lane change time) and the inter-vehicle time between the host vehicle M1 and the other vehicle M2. If the lane change time is longer than the inter-vehicle time (there is no sufficient inter-vehicle distance), the driving-action-plan compensation-range computation unit 65 judges that the passing is not possible only with the rack assist motor 80b. In this case, the travel controller 60 starts deceleration.

On the other hand, if the lane change time is shorter than the inter-vehicle time (there is a sufficient inter-vehicle distance), the driving-action-plan compensation-range computation unit 65 judges that the passing is possible only with the rack assist motor 80b. In this case, the travel controller 60 starts the passing. By limiting the driving action plan in this manner, the driving action plan will remain unchanged even if the steering-reaction-force generation motor 80a actually fails, and the host vehicle will therefore not come to a standstill or an emergency stop but be able to decelerate or pass the other vehicle. In other words, autonomous driving is possible which ensures safety for a certain period of time even when the steering-reaction-force generation motor 80a actually fails. Note that the driving-action-plan compensation-range computation unit 65 may also judge whether the passing is possible only with the steering-reaction-force generation motor 80a. Also, the driving-action-plan compensation-range computation unit 65 may judge whether or not the passing is possible by checking the travel state (speed and acceleration) of other neighboring vehicles M3 and M4.

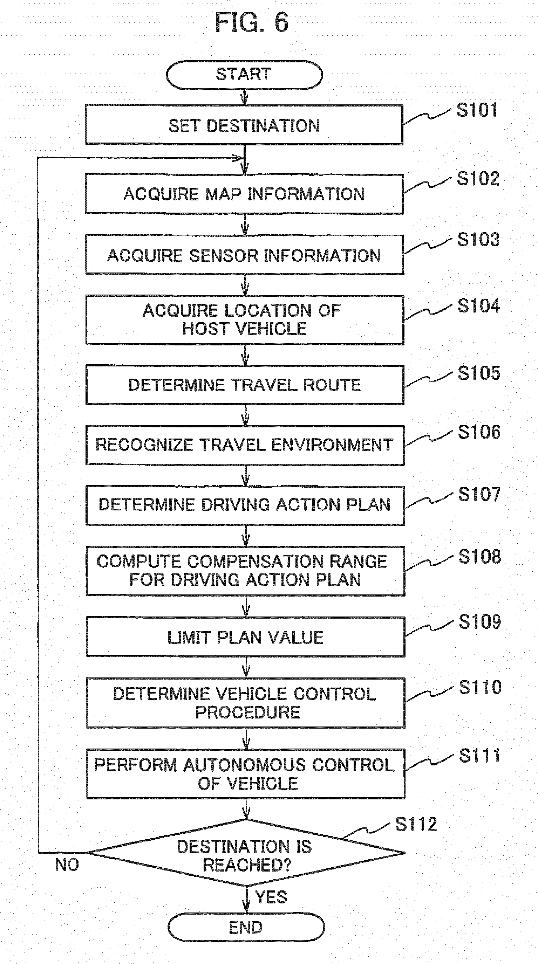

Next, an example of the operation of the vehicle control device 1 will be described with reference to a flowchart illustrated in Fig. 6. This processing starts once the ignition key of the host vehicle is turned on.

In step S101, the destination setting unit 61 sets a destination inputted by the driver or an occupant.

In step S102, the travel-route determination unit 62 acquires map information from the map database 30.

In step S103, the travel-route determination unit 62 acquires information from the sensor group 40.

In step S104, the travel-route determination unit 62 acquires the current location of the host vehicle from the GPS receiver 10.

In step S105, the travel-route determination unit 62 determines a first travel route based on the destination, the map information, and the current location.

In step S106, the travel-environment recognition unit 63 recognizes the travel environment by acquiring information from the sensor group 40.

In step S107, the driving-action-plan determination unit 64 determines a driving action plan based on the travel route determined in step S105 and the travel environment recognized in step S106.

In step S108, the driving-action-plan compensation-range computation unit 65 computes a compensation range for the driving action plan that can ensure safety in the case where abnormality has occurred in one of the actuators having a redundant configuration.

In step S109, the plan-value limiting unit 66 limits the driving action plan based on the calculation value computed in step 108.

In step S110, the vehicle-control-procedure determination unit 67 determines a vehicle control procedure based on the driving action plan limited in step S109.

In step S111, the vehicle control unit 68 controls the various actuators based on the vehicle control procedure.

In step S112, the travel controller 60 judges whether or not the destination has been reached by using the current location acquired from the GPS receiver 10. If the destination has been reached (Yes in step S114), the series of processes is ended. If the destination has not yet been reached (No in step S114), the processing returns to step S102.

As described above, the vehicle control device 1 according to this embodiment can achieve the following operations and advantageous effects.

The vehicle control device 1 determines a travel route to a destination set in advance and determines a driving action plan following the travel route based on the travel state of the host vehicle and the travel environment of its periphery. The vehicle control device 1 computes a compensation range for the driving action plan that allows travel even in a state where the driving performance or braking performance of one of the actuators having a redundant configuration has decreased, and limits the driving action plan. In this way, even if the driving performance or braking performance of one of the actuators has decreased, the driving action plan will remain unchanged, and the host vehicle will therefore not come to a standstill or an emergency stop. Hence, autonomous driving ensuring safety for a certain period of time will be possible.

The vehicle control device 1 may compute a compensation range for the driving action plan that allows travel even in a state where one of the actuators having a redundant configuration has failed, and limits the driving action plan. In this way, even if one of the actuators fails, the driving action plan will remain unchanged, and the host vehicle will therefore not come to a standstill or an emergency stop. Hence, autonomous driving ensuring safety for a certain period of time will be possible.

Also, the vehicle control device 1 includes the brake actuator 82, which has a redundant configuration. In this way, even if one part of the brake actuator fails, the driving action plan will remain unchanged, and the host vehicle will therefore not come to a standstill or an emergency stop. Hence, autonomous driving ensuring safety for a certain period of time will be possible.

Also, the vehicle control device 1 includes the steering actuator 80, which has a redundant configuration. In this way, even if one part of the steering actuator fails, the driving action plan will remain unchanged, and the host vehicle will therefore not come to a standstill or an emergency stop. Hence, autonomous driving ensuring safety for a certain period of time will be possible.

Also, the brake actuator 82 includes the friction-brake assist motor 82a, the drive motor 82b, which functions as a regenerative cooperative brake, and the parking brake 82c. The brake actuator 82 therefore has a redundant configuration. In this way, even if one part of the brake actuator fails, the driving action plan will remain unchanged, and the host vehicle will therefore not come to a standstill or an emergency stop. Hence, autonomous driving ensuring safety for a certain period of time will be possible.

Also, the steering actuator 80 includes the steering-reaction-force generation motor 80a and the rack assist motor 80b. The steering actuator 80 therefore has a redundant configuration. In this way, even if one part of the actuator fails, the driving action plan will remain unchanged, and the host vehicle will therefore not come to a standstill or an emergency stop. Hence, autonomous driving ensuring safety for a certain period of time will be possible.

### [Second Embodiment]

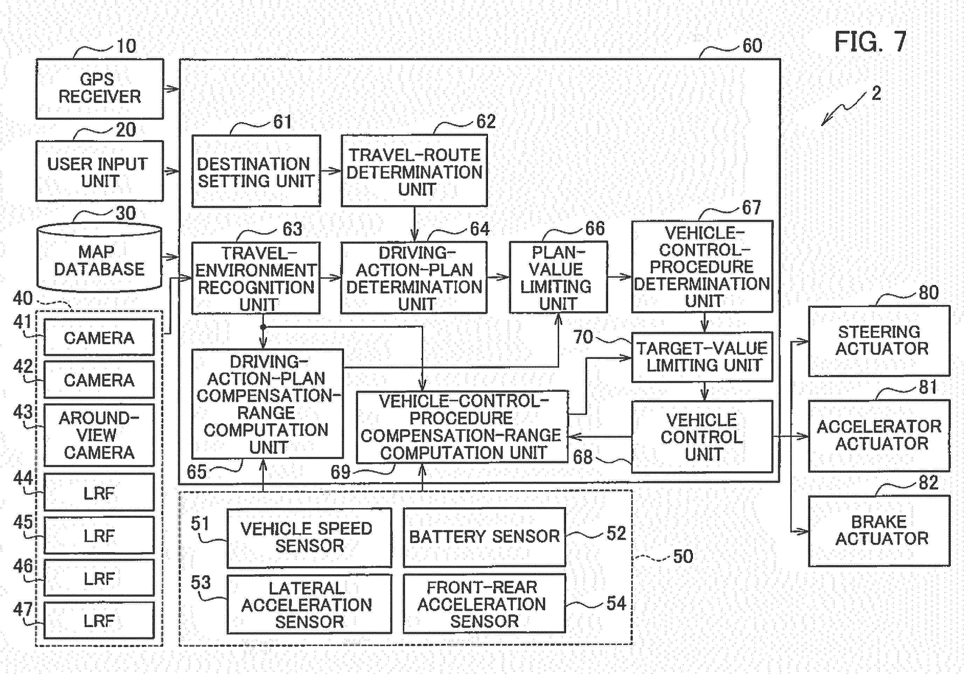

Next, the configuration of a vehicle control device 2 according to a second embodiment of the present invention will be described with reference to Fig. 7. The second embodiment differs from the first embodiment in that the travel controller 60 further includes a vehicle-control-procedure compensation-range computation unit 69 and a target-value limiting unit 70. Description of the portions of the configuration overlapping the first embodiment will be omitted by referring to their reference signs. In the following, the difference will be mainly described.

The vehicle-control-procedure compensation-range computation unit 69 (lower-level action-plan compensation-range computation unit) computes a compensation range for the vehicle control procedure based on information acquired from the travel-environment recognition unit 63 and the sensor group 50 and information acquired from the vehicle control unit 68. Specifically, the vehicle-control-procedure compensation-range computation unit 69 computes a compensation range (vehicle-speed target value and steering target value) for the vehicle control procedure that can ensure safety in the case where abnormality has occurred in one of the actuators having a redundant configuration based on information on the location of the host vehicle, the traffic lights, other vehicles, pedestrians, and the like present on the periphery of the host vehicle and information on the road surface condition and the travel state of the host vehicle. The driving-action-plan compensation-range computation unit 65 outputs the vehicle-speed target value and the steering target value as the computation result to the target-value limiting unit 70.

The target-value limiting unit 70 (lower-level action-plan limiting unit) limits or changes the control procedure (vehicle-speed target value and steering target value), acquired from the vehicle-control-procedure determination unit 67, based on the vehicle-speed target value and the steering target value acquired from the vehicle-control-procedure compensation-range computation unit 69, and outputs the limited or changed control procedure to the vehicle control unit 68.

Next, an example of the travel control in the second embodiment will be described with reference to Fig. 4, as in the first embodiment.

In the first embodiment, as illustrated in Fig. 4, the driving action plan is limited so as to start deceleration at the deceleration start position P2 so that the host vehicle will be able to stop at the stop position only with the regenerative cooperative brake. Meanwhile, regenerative cooperative brakes are generally designed to achieve an amount of regeneration of about 0.15 to 0.20 G, and therefore a regenerative cooperative brake cannot be expected to work when the vehicle speed is around 7 km/h. In view of this, the vehicle-control-procedure compensation-range computation unit 69 monitors the vehicle speed during deceleration, and computes a vehicle-speed target value such that the vehicle speed will be 7 km/h or lower at a point around 2 m before the stop line. The vehicle-control-procedure compensation-range computation unit 69 then outputs, to the target-value limiting unit 70, a command to stop using the parking brake 82c when the host vehicle reaches a point around 2 m before the stop line. In this way, it will be possible to certainly stop at the stop position by using the regenerative cooperative brake and the parking brake 82c even if the friction-brake assist motor 82a actually fails. Hence, safer autonomous driving will be possible.

Next, another example of the travel control in the second embodiment will be described with reference to Fig. 5, as in the first embodiment. In the first embodiment, description has been given of the case where the host vehicle M1 either passes another vehicle or decelerates. In the second embodiment, the vehicle-control-procedure compensation-range computation unit 69 limits the lateral acceleration in advance to a low level so that the host vehicle will be able to turn only with the rack assist motor 80b, that is, the host vehicle will not make a larger curve outward even if the steering-reaction-force generation motor 80a fails. In this way, even if the steering-reaction-force generation motor 80a actually fails, the driving action plan and the vehicle control procedure will remain unchanged, and the host vehicle will therefore not come to a standstill or an emergency stop but be able to pass the other vehicle. In other word, autonomous driving is possible which ensures safety for a certain period of time even when the steering-reaction-force generation motor 80a actually fails.

Next, an example of the operation of the vehicle control device 2 will be described with reference to a flowchart illustrated in Fig. 6. Note that the operations in steps S201 to S210 and step S214 are the same as the operations in steps S101 to 110 and step S112, respectively; thus, detailed description thereof will be omitted, and only the part of the example operation different from Fig. 5 will be described.

In step S211, the vehicle-control-procedure compensation-range computation unit 69 computes a compensation range for the vehicle control procedure that can ensure safety in the case where abnormality has occurred in one of the actuators having a redundant configuration.

In step S212, the target-value limiting unit 70 limits the vehicle control procedure based on the computation result (vehicle-speed target value and steering target value) of step S211.

In step S213, the vehicle control unit 68 controls the various actuators based on the vehicle control procedure limited in step S212.

As described above, the vehicle control device 2 according to the second embodiment can achieve the following operations and advantageous effects.

The vehicle control device 2 determines a travel route to a destination set in advance and determines a driving action plan following the travel route based on the travel state of the host vehicle and the travel environment of its periphery. The vehicle control device 1 computes a compensation range for the driving action plan that allows travel even in a state where the driving performance or braking performance of one of the actuators having a redundant configuration has decreased, and limits the driving action plan. Further, the vehicle control device 2 computes a compensation range (vehicle-speed target value and steering target value) for the vehicle control procedure that can ensure safety in the case where abnormality has occurred in one of the actuators having a redundant configuration, and limits the vehicle control procedure based on the computation result. In this way, even if the driving performance or braking performance of one of the actuators has decreased, the driving action plan and the vehicle control procedure will remain unchanged, and the host vehicle will therefore not come to a standstill or an emergency stop. Hence, autonomous driving ensuring safety for a certain period of time will be possible.

Although embodiments of the present invention have been described above, it should not be understood that the statements and the drawings constituting part of this disclosure limit this invention. Various alternative embodiments, examples, and operation techniques will become apparent to those skilled in the art from this disclosure. For example, if the host vehicle cannot reach the destination with the driving action plan limited, the host vehicle may be caused to travel to a travelable safe location. In this way, the host vehicle can travel and flee to a safe location in a situation where it cannot reach the destination. This can improve the safety of the autonomous driving.

Also, although the driving action plan and the vehicle control procedure are limited in the above embodiments, the travel route may be limited. For example, using information on the road slopes (downhills) registered in the map database 30, the travel route may be limited such that the host vehicle will not travel through a route having road slopes that exceed the compensation performance of the various actuators, such as the maximum amount of regenerative cooperative braking. In this way, as in the cases of limiting the driving action plan and the vehicle control procedure, even if one of the actuators fails, the host vehicle will not come to a standstill or an emergency stop. Hence, autonomous driving ensuring safety for a certain period of time will be possible,

### REFERENCE SIGNS LIST

- 41, 42: camera
- 43: around-view camera
- 44 to 47: laser rangefinder
- 51: vehicle speed sensor
- 52: battery sensor
- 53: lateral acceleration sensor
- 54: front-rear acceleration sensor
- 60: travel controller
- 65: driving-action-plan compensation-range computation unit
- 69: vehicle-control-procedure compensation-range computation unit
- 80: steering actuator
- 82: brake actuator

## Claims

1. A vehicle control device comprising:
a periphery-information detection unit (40) that detects information on a periphery of a vehicle;
a travel-state detection unit (50) that detects a travel state of the vehicle;
a travel controller (60) that controls autonomous travel of the vehicle based on the information on the periphery detected by the periphery-information detection unit (40), the travel state detected by the travel-state detection unit (50), a higher-level action plan for reaching a destination set in advance, and a lower-level action plan for controlling at least one of a vehicle-speed target value and a steering target value to accomplish the higher-level action plan;
actuator units each including a redundant configuration and used for the autonomous travel of the vehicle;
a higher-level action-plan compensation-range computation unit (65) that computes a compensation range for the higher-level action plan that allows travel in a state where performance of one of the actuator units has decreased; and
a higher-level action-plan limiting unit (66) that limits the higher-level action plan by using the compensation range computed by the higher-level action-plan compensation-range computation unit (65),
**characterized in that**
the travel controller (60) controls the autonomous travel of the vehicle based on the higher-level action plan limited by the higher-level action-plan limiting unit (66) even in a state where performance of the actuator units has not decreased.

2. The vehicle control device according to claim 1, wherein the higher-level action-plan compensation-range computation unit (65) computes a compensation range for the higher-level action plan that allows travel in a state where one of the actuator units has failed.

3. The vehicle control device according to claim 1 or 2, further comprising:
a lower-level action-plan compensation-range computation unit (69) that computes a compensation range for the lower-level action plan that allows travel in a state where performance of one of the actuator units has decreased; and
a lower-level action-plan limiting unit (70) that limits the lower-level action plan by using the compensation range computed by the lower-level action-plan compensation-range computation unit (69).

4. The vehicle control device according to any one of claims 1 to 3, wherein the actuator unit is a brake actuator (82).

5. The vehicle control device according to any one of claims 1 to 3, wherein the actuator unit is a steering actuator (80).

6. The vehicle control device according to claim 4, wherein the brake actuator (82) includes a friction brake (82a), a regenerative cooperative brake (82b), and a parking brake (82c) as the redundant configuration.

7. The vehicle control device according to claim 5, wherein the steering actuator (80) includes a steering motor (80a) and a rack motor (80b) as the redundant configuration.

8. A vehicle control method comprising:
controlling autonomous travel of a vehicle based on information on a periphery of the vehicle, a travel state of the vehicle, a higher-level action plan for reaching a preset destination set in advance, and a lower-level action plan for controlling at least one of a vehicle-speed target value and a steering target value to accomplish the higher-level action plan;
computing a compensation range for the higher-level action plan that allows travel in a state where performance of one of actuator units has decreased, the actuator units each including a redundant configuration and used for the autonomous travel of the vehicle;
limiting the higher-level action plan by using the computed compensation range; and
**characterized by**
controlling the autonomous travel of the vehicle based on the higher-level action plan limited even in a state where performance of the actuator units has not decreased.

## Patentansprüche

1. Fahrzeugsteuerungsvorrichtung, umfassend:
eine Umgebungsinformations-Erfassungseinheit (40), die Information über eine Umgebung eines Fahrzeugs erfasst;
eine Fahrzustands-Erfassungseinheit (50), die einen Fahrzustand des Fahrzeugs erfasst;
eine Fahrsteuerung (60), die autonomes Fahren des Fahrzeugs steuert, basierend auf der Information über die Umgebung, die von der Umgebungsinformations-Erfassungseinheit (40) erfasst wurde, dem Fahrzustand, der von der Fahrzustands-Erfassungseinheit (50) erfasst wurde, einem übergeordneten Handlungsplan zum Erreichen eines im Voraus festgelegten Ziels, und einem untergeordneten Handlungsplan zur Steuerung zumindest eines von einem Fahrzeuggeschwindigkeits-Zielwert und einem Lenk-Zielwert zum Erreichen des übergeordneten Handlungsplans;
Aktoreinheiten, die jeweils eine redundante Konfiguration aufweisen und für das autonome Fahren des Fahrzeugs verwendet werden;
eine Kompensationsbereichs-Berechnungseinheit für den übergeordneten Handlungsplan (65), die einen Kompensationsbereich für den übergeordneten Handlungsplan berechnet, der Fahren in einem Zustand erlaubt, in dem Leistung einer der Aktoreinheiten abgenommen hat; und
eine Begrenzungseinheit für den übergeordneten Handlungsplan (66), die den übergeordneten Handlungsplan begrenzt durch Verwendung des Kompensationsbereichs, der von der Kompensationsbereichs-Berechnungseinheit für den übergeordneten Handlungsplan (65) berechnet wurde.
**dadurch gekennzeichnet, dass**
die Fahrsteuerung (60) das autonome Fahren des Fahrzeugs steuert, basierend auf dem übergeordneten Handlungsplan, der von der Begrenzungseinheit für den übergeordneten Handlungsplan (66) begrenzt wurde, selbst in einem Zustand, in dem die Leistung der Aktoreinheiten nicht abgenommen hat.

2. Fahrzeugsteuerungsvorrichtung nach Anspruch 1, wobei die Begrenzungseinheit für den übergeordneten Handlungsplan (66) einen Kompensationsbereich für den übergeordneten Handlungsplan berechnet, der das Fahren in einem Zustand ermöglicht, in dem eine der Aktoreinheiten ausgefallen ist.

3. Fahrzeugsteuerungsvorrichtung nach Anspruch 1 oder 2, ferner umfassend:
eine Kompensationsbereichs-Berechnungseinheit für den untergeordneten Handlungsplan (69), die einen Kompensationsbereich für den untergeordneten Handlungsplan berechnet, der Fahren in einem Zustand erlaubt, in dem Leistung einer der Aktoreinheiten abgenommen hat; und
eine Begrenzungseinheit für den untergeordneten Handlungsplan (70), die den untergeordneten Handlungsplan begrenzt durch Verwendung des Kompensationsbereichs, der von der Kompensationsbereichs-Berechnungseinheit für den untergeordneten Handlungsplan (69) berechnet wurde.

4. Fahrzeugsteuerungsvorrichtung nach einem der Ansprüche 1 bis 3, wobei die Aktoreinheit ein Bremsaktor (82) ist.

5. Fahrzeugsteuerungsvorrichtung nach einem der Ansprüche 1 bis 3, wobei die Aktoreinheit ein Lenkaktor (80) ist.

6. Fahrzeugsteuerungsvorrichtung nach Anspruch 4, wobei der Bremsaktor (82) eine Reibungsbremse (82a), eine regenerative kooperative Bremse (82b), und eine Parkbremse (82c) als redundante Konfiguration beinhaltet.

7. Fahrzeugsteuerungsvorrichtung nach Anspruch 5, wobei der Lenkaktor (80) einen Lenkmotor (80a) und einen Zahnstangenmotor (80b) als redundante Konfiguration beinhaltet.

8. Fahrzeugsteuerungsverfahren, umfassend:
Steuern von autonomen Fahren eines Fahrzeugs basierend auf Information über eine Umgebung des Fahrzeugs, einem Fahrzustand des Fahrzeugs, einem übergeordneten Handlungsplan zum Erreichen eines im Voraus festgelegten Ziels, und einem untergeordneten Handlungsplan zur Steuerung zumindest eines von einem Fahrzeuggeschwindigkeits-Zielwert und einem Lenk-Zielwert zum Erreichen des übergeordneten Handlungsplans;
Berechnen eines Kompensationsbereichs für den übergeordneten Handlungsplan, der Fahren in einem Zustand erlaubt, in dem Leistung einer der Aktoreinheiten abgenommen hat, wobei die Aktoreinheiten jeweils eine redundante Konfiguration aufweisen und für das autonome Fahren des Fahrzeugs verwendet werden;
Begrenzen des übergeordneten Handlungsplans durch Verwenden des berechneten Kompensationsbereichs; und
**gekennzeichnet durch**
Steuern des autonomen Fahrens des Fahrzeugs basierend auf dem begrenzten übergeordneten Handlungsplan, selbst in einem Zustand, in dem die Leistung der Aktoreinheiten nicht abgenommen hat.

## Revendications

1. Dispositif de commande de véhicule comprenant :
une unité de détection d'informations de périphérie (40) qui détecte des informations concernant une périphérie d'un véhicule ;
une unité de détection d'état de déplacement (50) qui détecte un état de déplacement du véhicule ;
un équipement de commande de déplacement (60) qui commande un déplacement autonome du véhicule sur la base des informations concernant la périphérie détectées par l'unité de détection d'informations de périphérie (40), de l'état de déplacement détecté par l'unité de détection d'état de déplacement (50), d'un plan d'action de niveau supérieur pour atteindre une destination définie à l'avance, et d'un plan d'action de niveau inférieur pour commander au moins une valeur parmi une valeur cible de vitesse de véhicule et une valeur cible de guidage pour réaliser le plan d'action de niveau supérieur ;
des unités d'actionneur comprenant chacune une configuration redondante et utilisées pour le déplacement autonome du véhicule ;
une unité de calcul de plage de compensation de plan d'action de niveau supérieur (65) qui calcule une plage de compensation pour le plan d'action de niveau supérieur qui permet un déplacement dans un état où une performance de l'une des unités d'actionneur a diminué ; et
une unité de limitation de plan d'action de niveau supérieur (66) qui limite le plan d'action de niveau supérieur en utilisant la plage de compensation calculée par l'unité de calcul de plage de compensation de plan d'action de niveau supérieur (65),
**caractérisé en ce que**
l'équipement de commande de déplacement (60) commande le déplacement autonome du véhicule sur la base du plan d'action de niveau supérieur limité par l'unité de limitation de plan d'action de niveau supérieur (66) même dans un état où une performance des unités d'actionneur n'a pas diminué.

2. Dispositif de commande de véhicule selon la revendication 1, dans lequel l'unité de calcul de plage de compensation de plan d'action de niveau supérieur (65) calcule une plage de compensation pour le plan d'action de niveau supérieur qui permet un déplacement dans un état dans lequel l'une des unités d'actionneur est défaillante.

3. Dispositif de commande de véhicule selon la revendication 1 ou 2, comprenant en outre :
une unité de calcul de plage de compensation de plan d'action de niveau inférieur (69) qui calcule une plage de compensation pour le plan d'action de niveau inférieur qui permet un déplacement dans un état dans lequel une performance de l'une des unités d'actionneur a diminué ; et
une unité de limitation de plan d'action de niveau inférieur (70) qui limite le plan d'action de niveau inférieur en utilisant la plage de compensation calculée par l'unité de calcul de plage de compensation de plan d'action de niveau inférieur (69).

4. Dispositif de commande de véhicule selon l'une quelconque des revendications 1 à 3, dans lequel l'unité d'actionneur est un actionneur de frein (82).

5. Dispositif de commande de véhicule selon l'une quelconque des revendications 1 à 3, dans lequel l'unité d'actionneur est un actionneur de guidage (80).

6. Dispositif de commande de véhicule selon la revendication 4, dans lequel l'actionneur de frein (82) comprend un frein à friction (82a), un frein coopératif par récupération (82b), et un frein de stationnement (82c) en tant que configuration redondante.

7. Dispositif de commande de véhicule selon la revendication 5, dans lequel l'actionneur de guidage (80) comprend un moteur de guidage (80a) et un moteur à crémaillère (80b) en tant que configuration redondante.

8. Procédé de commande de véhicule comprenant les étapes consistant à :
commander un déplacement autonome d'un véhicule sur la base d'informations concernant une périphérie du véhicule, d'un état de déplacement du véhicule, d'un plan d'action de niveau supérieur pour atteindre une destination prédéfinie préalablement définie, et d'un plan d'action de niveau inférieur pour commander au moins un valeur parmi une valeur cible de vitesse de véhicule et une valeur cible de guidage pour réaliser le plan d'action de niveau supérieur ;
calculer une plage de compensation pour le plan d'action de niveau supérieur qui permet un déplacement dans un état dans lequel une performance de l'une des unités d'actionneur a diminué, les unités d'actionneur comprenant chacune une configuration redondante et étant utilisées pour un déplacement autonome du véhicule ;
limiter le plan d'action de niveau supérieur en utilisant la plage de compensation calculée ; et
**caractérisé par**
la commande du déplacement autonome du véhicule sur la base du plan d'action de niveau supérieur limité même dans un état dans lequel une performance des unités d'actionneur n'a pas diminué.
